(19) Europäisches Patentamt
European Patent Office
Office européen des brevets

(11) **EP 3 990 376 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **20735107.3**

(22) Anmeldetag: **23.06.2020**

(51) Internationale Patentklassifikation (IPC):
**B65G 47/84** (2006.01)    **B67C 7/00** (2006.01)

(52) Gemeinsame Patentklassifikation (CPC):
**B67C 7/0046; B65G 47/846; B67C 2007/006**

(86) Internationale Anmeldenummer:
**PCT/EP2020/067452**

(87) Internationale Veröffentlichungsnummer:
**WO 2020/260253 (30.12.2020 Gazette 2020/53)**

(54) **BEHÄLTERBEHANDLUNGSVORRICHTUNG**

CONTAINER-PROCESSING DEVICE

DISPOSITIF DE TRAITEMENT DE CONTENANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2019 DE 102019117382**

(43) Veröffentlichungstag der Anmeldung:
**04.05.2022 Patentblatt 2022/18**

(73) Patentinhaber: **KHS GmbH**
**44143 Dortmund (DE)**

(72) Erfinder:
• **MUSZINSKI, Olaf**
**65779 Kelkheim (DE)**
• **FAHLDIECK, Andreas**
**55743 Idar-Oberstein (DE)**
• **STOLTE, Thomas**
**55545 Bad Kreuznach (DE)**
• **WEIRICH, Dominik**
**55543 Bad Kreuznach (DE)**

(56) Entgegenhaltungen:
WO-A1-2020/164953    DE-A1- 102005 042 275
DE-A1- 102017 112 220    JP-A- 2001 287 794
JP-A- 2005 145 477    JP-A- H09 142 649
US-A- 1 301 348

**Beschreibung**

Die Erfindung bezieht sich auf eine Behälterbehandlungsvorrichtung, insbesondere eine Füllmaschine zum Füllen von Dosen oder dergleichen Behälter mit einem flüssigen Füllgut. Behälterbehandlungsvorrichtungen, insbesondere Füllmaschinen zum Füllen von Dosen, insbesondere auch zum Druckfüllen von Dosen mit einem flüssigen Füllgut, sind dem

Fachmann in unterschiedlichster Form bekannt. Hierbei werden die Dosen der Füllmaschine über einen ersten als Behältereinlauf ausgebildeten Transporteur zugeführt, anschließend an einen in Behandlungsrichtung nachgelagerten und um eine Maschinenachse umlaufenden Rotor übergeben, sowie von einem dem Rotor in Behandlungsrichtung wiederum nachgelagerten und als Behälterauslauf ausgebildeten zweiten Transporteur abgeführt.

Entlang einer solcherart ausgebildeten Behälterbehandlungsstrecke, wie sie in einer Füllmaschine realisiert ist, können mehrere jeweils um eine vertikale Maschinenachse rotativ angetriebene Transportelemente vorgesehen sein, die transportmäßig aneinander anschließen und die Behälterbehandlungsstrecke ausbilden, so dass ein Behälter, insbesondere eine Dose, durch Weitergabe von einem umlaufend angetriebenen Transportelement zu einem in Transportrichtung daran anschließenden Transportelement entlang einer mehrfach umgelenkten Behälterbehandlungsstrecke gefördert wird.

Dabei kann auch vorgesehen sein, dass es sich bei den benachbarten Transportelementen um ein rotativ umlaufendes Transportelement sowie um ein dazu benachbartes, die Behälter linear förderndes, Transportelement handelt. Derartige Transportelemente sind auch in der Füllmaschine ausgebildet. Insbesondere kann der Behälterauslauf in Form eines Transfersterns oder Linearförderers realisiert sein, mittels dem die gefüllten, jedoch noch offenen Dosen an einen Verschließer, beispielsweise einen Dosenverschließer, weitergefördert werden.

Bei den als Linearförderer ausgebildeten Transportelementen werden die Behälter im Wesentlichen geradlinig oder alternativ auch kurvenförmig und im Wesentlichen auch ohne Änderung ihrer Ortshöhe transportiert. Derartige als Linearförderer ausgebildete Transportelemente können auch zwischen zwei als rotative Transportelemente ausgebildeten Transportelementen angeordnet sein.

Bei der Weitergabe der Dosen innerhalb der Füllmaschine von einem Transportelement zu einem in Behandlungsrichtung folgenden, beispielsweise als Behälterauslauf ausgebildeten Transportelement kommt es häufig zu einer Krümmungsänderung in der Bewegungsbahn der Dosen und damit zu einem Wechsel der auf die Dosen wirkenden Zentripetalbeschleunigung. Bei einem hohen Behälterdurchsatz (Anzahl der geförderten Dosen pro Zeiteinheit) erfährt die jeweilige Dose dabei einen Querruck, verursacht durch starke Beschleunigungskräfte, was zu einem Herausschwappen des Füllguts aus der Dosenmündung führen kann.

Dabei werden im Stand der Technik die noch offenen Dosen linear, insbesondere ausschließlich geradlinig, aus dem Rotor der Füllmaschine in einem Tangentialpunkt an einem Behälterauslauf ausgeleitet und dort beispielsweise ebenfalls linear weitergefördert. Durch die baulichen Gegebenheiten der Abmessungen des Behälterauslaufs, insbesondere dessen Durchmesser, sowie des Durchmessers des Rotors der Füllmaschine und der Geländerführung des Behälterauslaufs stellt sich dabei an dem Rotor der Füllmaschine ein durch die jeweiligen Abmessungen dieser Bauteile vorgegebener nutzbarer Behandlungswinkel, also eine nutzbare Behandlungsbogenlänge des teilkreisförmigen Behandlungsbereiches an dem Rotor der Füllmaschine ein, entlang dem die Behälter an Behandlungspositionen behandelt werden können.

Aus der Druckschrift DE 10 2005 042 275 A1 ist eine Vorrichtung zum Füllen und Verschließen von Gefäßen, insbesondere von Weithalsflaschen, bekannt. Diese Vorrichtung weist einen Füller, von dem die Gefäße im Wesentlichen tangential abgeführt werden können, und einen Verschließer auf, der als Linearverschließer ausgebildet ist.

Aus der Druckschrift JP 2001 287794 A ist eine weitere Füllmaschine bekannt, die über einen Übergangskurvenabschnitt die Behälternisse von der Füllmaschine an einen der Füllmaschine nachgelagerten Verschließen fördert.

Aufgabe der Erfindung ist es, eine Behälterbehandlungsvorrichtung, insbesondere Füllmaschine zum Füllen von Dosen oder dergleichen Behälter mit einem flüssigen Füllgut anzugeben, die im Vergleich zum Stand der Technik einen größeren Behandlungswinkel und damit eine längere Behälterbehandlungsstrecke bei ansonsten gleichbleibenden Außenabmessungen der Füllmaschine und einen möglichst querruckfreien Transport der Behälter entlang der Behälterbehandlungsstrecke ermöglicht.

Die Aufgabe wird durch eine Behälterbehandlungsvorrichtung, insbesondere eine Füllmaschine zum Füllen von Behältern, insbesondere von Dosen oder dergleichen Behälter mit einem flüssigen Füllgut gemäß den Merkmalen des unabhängigen Patentanspruchs 1 gelöst. Die Unteransprüche betreffen dabei besonders vorteilhafte Weiterbildungen der Erfindung.

Gemäß einem wesentlichen Aspekt bezieht sich die Erfindung auf eine Behälterbehandlungsvorrichtung, insbesondere eine Füllmaschine zum Füllen von Dosen oder dergleichen Behälter mit einem flüssigen Füllgut entlang einer in einer Behandlungsrichtung verlaufenden Behälterbehandlungsstrecke.

Die Behälterbehandlungsvorrichtung umfasst hierbei wenigstens einen ersten Transporteur, einen dem ersten Transporteur in Behandlungsrichtung nachgelagerten Rotor mit mehreren Behandlungspositionen zur Behandlung der Behälter sowie einen dem Rotor in Behandlungsrichtung wiederum nachgelagerten zweiten Transporteur.

Dabei ist der erste Transporteur als Einlaufstern ausgebildet, mittels dem die zu behandelnden Behälter in einem Einlaufpunkt an den um eine Maschinenachse umlaufenden Rotor übergeben werden.

Der zweite Transporteur ist hingegen als Linearförderer ausgebildet, mittels dem die an den mehreren Behandlungspositionen des Rotors behandelten und noch unverschlossenen Behälter weiterförderbar sind.

Ferner stellt sich zwischen dem Einlaufpunkt und einem Auslaufpunkt des umlaufenden Rotors ein teilkreisförmiger Behandlungsbereich mit einer vorgegebenen Behandlungsbogenlänge ein, entlang dem die mehreren Behandlungspositionen ausgebildet sind.

Zur Erhöhung der Behandlungsbogenlänge des teilkreisförmigen Behandlungsbereiches ist dem zweiten Transporteur eine zumindest abschnittsweise kurvenförmige Aufnahme- und Überleiteinrichtung zur Aufnahme der Behälter im Auslaufpunkt und Uberleitung an den zweiten Transporteur vorgeschaltet.

Erfindungsgemäß umfasst die Aufnahme- und Überleiteinrichtung der Behälterbehandlungsvorrichtung einen ersten, zumindest abschnittsweise kurvigen Transportstreckenabschnitt, auf dem der jeweilige Behälter förderbar ist, sowie einen in Behandlungsrichtung folgenden, geradlinig ausbildeten zweiten Transportstreckenabschnitt, auf dem der jeweilige Behälter weiterförderbar ist.

Gemäß einer nochmals weiteren vorteilhaften Ausführungsvariante kann dabei vorgesehen sein, dass der jeweilige Behälter nach Verlassen des Auslaufpunktes zunächst auf dem ersten Transportstreckenabschnitt entlang der Behälterbehandlungsstrecke in Behandlungsrichtung mittels der Aufnahme- und Überleiteinrichtung förderbar ist und der jeweilige Behälter unmittelbar nach Verlassen des ersten Transportstreckenabschnitts auf den zweiten Transportstreckenabschnitt übergebbar und dort mittels des zweiten Transporteurs geradlinig linear entlang der Behälterbehandlungsstrecke in Behandlungsrichtung weiterförderbar ist.

Gemäß einer nochmals weiteren vorteilhaften Ausführungsvariante kann dabei vorgesehen sein, dass sich mittels der kurvenförmigen Aufnahme- und Überleiteinrichtung ein Winkel zwischen dem Einlaufpunkt und dem Auslaufpunkt einstellt, der kleiner ausgebildet ist als ein Winkel zwischen dem Einlaufpunkt und dem tangentialen Auslaufpunkt eines ausschließlich geradlinig verlaufenden zweiten Transporteurs.

Erfindungsgemäß ist vorgesehen, dass der erste Transportstreckenabschnitt mehrere Übergangskurvenabschnitte aufweist, deren Krümmungsrichtung in Behandlungsrichtung unterschiedlich zueinander, insbesondere in dem ersten Übergangskurvenabschnitt linksgekrümmt, in dem zweiten Übergangskurvenabschnitt rechtsgekrümmt und im dritten Übergangskurvenabschnitt linksgekrümmt ausgebildet ist.

Gemäß einer nochmals weiteren vorteilhaften Ausführungsvariante kann dabei vorgesehen sein, dass der erste Transportstreckenabschnitt im Bereich seiner mehreren Übergangskurvenabschnitte eine verstellbare Kurvenbahn aufweist, die insbesondere mittels zumindest einer Verstelleinrichtung motorisch gesteuert und/oder geregelt einstellbar ausgebildet ist.

Gemäß einer nochmals weiteren vorteilhaften Ausführungsvariante kann dabei vorgesehen sein, dass die Behälter während ihres Transports zumindest entlang des ersten Transportstreckenabschnittes in einer durch beidseitig mittels Führungsgeländern begrenzten Gasse geführt sind, die die Kurvenbahn des zumindest einen Übergangskurvenabschnittes vorgeben.

Gemäß einer nochmals weiteren vorteilhaften Ausführungsvariante kann dabei vorgesehen sein, dass die Führungsgeländer des ersten Transportstreckenabschnittes im Übergangsbereich zu dem zweiten Transportstreckenabschnitt mit den Führungsgeländern des zweiten Transporteurs in Behandlungsrichtung fluchten.

Gemäß einer nochmals weiteren vorteilhaften Ausführungsvariante kann dabei vorgesehen sein, dass zumindest ein Übergangskurvenabschnitt des ersten Transportstreckenabschnittes als Klothoidenabschnitt und/oder Blossbogenabschnitt ausgebildet ist.

Gemäß einer nochmals weiteren vorteilhaften Ausführungsvariante kann dabei vorgesehen sein, dass zumindest ein Übergangskurvenabschnitt des ersten Transportstreckenabschnittes als Kurve ausgebildet ist, die über Polynome erzeugt wurde.

Gemäß einer nochmals weiteren vorteilhaften Ausführungsvariante kann dabei vorgesehen sein, dass zumindest ein Übergangskurvenabschnitt des ersten Transportstreckenabschnittes als Kurve ausgebildet ist, die über trigonometrische Funktionen erzeugt wurde.

Unter "Klothoide" im Sinne der Erfindung wird eine Kurve verstanden, deren Krümmung stetig linear zunimmt. Dabei bildet das Produkt aus Kurvenradius und Bogenlänge der Kurve eine Konstante. In anderen Worten ist die Krümmung an jeder Stelle der Kurve proportional zur Länge ihres Bogens bis zu dieser Stelle.

Unter "Behälter" im Sinne der Erfindung werden jedwede Behälter verstanden, insbesondere Flaschen, Dosen, Becher etc., jeweils aus Metall, Glas und/oder Kunststoff, vorzugsweise aus PET (Polyethylenterephthalat).

Der Ausdruck "im Wesentlichen" bzw. "etwa" bedeutet im Sinne der Erfindung Abweichungen vom jeweils exakten Wert um höchstens +/- 10%, bevorzugt um höchstens +/- 5%, und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1 beispielhaft und in schematischer Draufsicht eine teilweise dargestellte Füllmaschine zum Füllen von Dosen oder dergleichen Behälter mit flüssigem Füllgut;

Fig. 2 beispielhaft und in vereinfachter Darstellung ein Blockschaltbild der Füllmaschine gemäß Figur 1.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

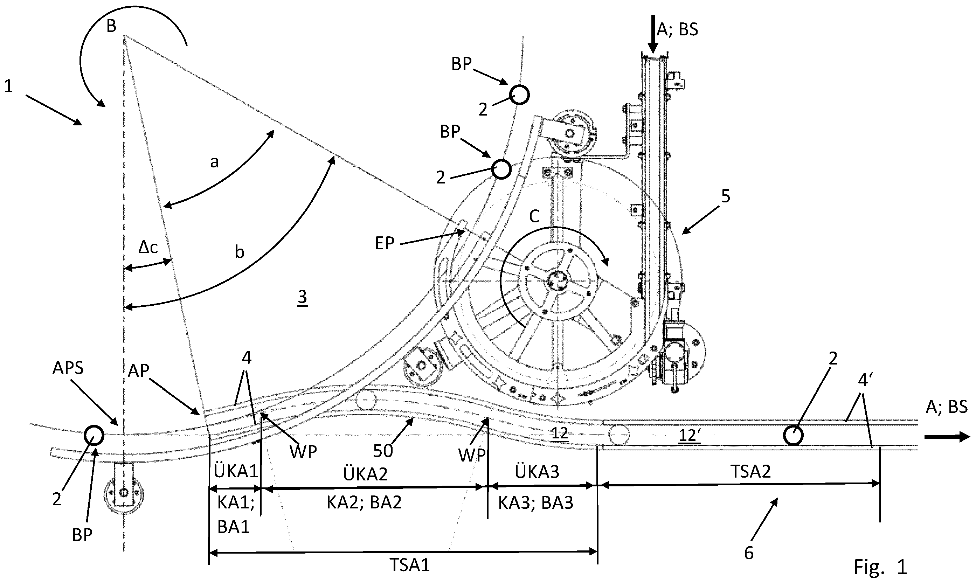

Die in der Fig. 1 allgemein mit 1 bezeichnete Behälterbehandlungsvorrichtung ist dabei als Füllmaschine ausgebildet und dient insbesondere zum Druckfüllen von Behältern 2 in Form von Dosen mit einem flüssigen Füllgut, beispielsweise mit Bier oder Softdrinks entlang einer in einer Behandlungsrichtung A verlaufenden Behälterbehandlungsstrecke BS.

Die Füllmaschine 1 ist als solche umlaufender Bauart mit einem nur ausschnittsweise dargestellten Rotor 3 ausgebildet, der während des Füllbetriebes in einer Drehrichtung B um eine vertikale Maschinenachse MA umlaufend angetrieben ist und an seinem Umfang eine Vielzahl von Behandlungspositionen BP aufweist, die in gleichen oder näherungsweise gleichen Winkelabständen vollumfänglich um die Maschinenachse MA verteilt im Bereich des Außenumfangs des Rotors 3 vorgesehen sind (wobei in den Figuren exemplarisch nur einige Behandlungspositionen BP gezeigt sind). An den Behandlungspositionen BP kann dabei die Behandlung, insbesondere die Füllung der Behälter 2 mit flüssigen Füllgut erfolgen.

Hierbei umfasst die erfindungsgemäße Behälterbehandlungsvorrichtung wenigstens einen ersten Transporteur 5, den dem ersten Transporteur 5 in Behandlungsrichtung A nachgelagerten Rotor 3 mit den mehreren Behandlungspositionen BP zur Behandlung der Behälter 2 sowie einen dem Rotor 3 in Behandlungsrichtung A wiederum nachgelagerten zweiten Transporteur 6.

Mehr im Detail werden die zu befüllenden Behälter 2 über den ersten als Behältereinlauf ausgebildeten Transporteur 5 in einem vorzugsweise tangentialen Einlaufpunkt EP an den um eine Maschinenachse MA umlaufenden Rotor 3 übergeben. Insbesondere ist der erste Transporteur 5 hierfür als ein sich in Drehrichtung C drehender Einlaufstern ausgebildet. Damit ist die Drehrichtung C des ersten Transporteurs 5 gegensinnig zur Drehrichtung B des Rotors 3 ausgebildet. Ferner ist der zweite Transporteur 6 als Linearförderer ausgebildet, mittels dem die an den mehreren Behandlungspositionen BP des Rotors 3 behandelten und noch unverschlossenen Behälter 2 weiterförderbar sind.

Zwischen dem Einlaufpunkt EP und einem vorzugsweise tangentialen Auslaufpunkt AP des umlaufenden Rotors 3 stellt sich dabei ein teilkreisförmiger Behandlungsbereich mit einer vorgegebenen Behandlungsbogenlänge ein, entlang dem die mehreren Behandlungspositionen BP ausgebildet sind.

Insbesondere kann der als Behälterauslauf ausgebildete zweite Transporteur 6 zumindest abschnittsweise als Linearförderer ausgebildet sein, der die dann bereits befüllten, aber noch unverschlossenen Dosen 2 nach Verlassen des Rotors 3 entlang der Behälterbehandlungsstrecke BS in Behandlungsrichtung A weiterfördert. Nachfolgend können die Dosen 2 an einen nicht nähergehend dargestellten Verschließer, insbesondere an einen Dosenverschließer, gefördert und dort in der dem Fachmann bekannten Weise dicht verschlossen. Im Rahmen einer Verblockung der Behälterbehandlungsvorrichtung kann der Verschließer als Teil oder Bestandteil der Füllanlage und damit der Füllmaschine 1 ausgebildet sein.

Insbesondere bei der Weitergabe der Dosen 2 nach Verlassen des Auslaufpunktes AP des Rotors 3 der Füllmaschine 1 auf den in Transportrichtung A nachfolgenden zweiten Transporteur 6 kommt es zu einer Krümmungsänderung in der Bewegungsbahn der Dosen 2 und damit zu einem Wechsel der auf die Dosen 2 wirkenden Zentripetalbeschleunigung.

Ferner wird die nutzbare Behandlungsbogenlänge des teilkreisförmigen Behandlungsbereiches an dem Rotor der Füllmaschine durch den Winkel a zwischen dem Einlaufpunkt EP und dem Auflaufpunkt AP bestimmt.

Dabei gilt: Je kleiner der Winkel a ausgebildet ist, desto größer ist dabei der nutzbare Behälterbehandlungswinkel und damit die nutzbare Behandlungsbogenlänge des teilkreisförmigen Behandlungsbereichs, die sich aus der Formel:

$$360° - \text{Winkel } a$$

berechnen lässt.

Im vorliegenden Ausführungsbeispiel ist vorgesehen, dass zur Erhöhung der nutzbaren Behandlungsbogenlänge des teilkreisförmigen Behandlungsbereiches dem zweiten Transporteur 6 eine zumindest abschnittsweise kurvenförmige Aufnahme- und Überleiteinrichtung 50 zur Aufnahme der Behälter 2 im Auslaufpunkt AP und Überleitung an den zweiten Transporteur 6 vorgeschaltet ist.

In anderen Worten ist also zwischen dem Auslaufpunkt AP und dem zweiten Transporteur 6 die zumindest abschnittsweise kurvenförmig ausgebildete Aufnahme- und Überleiteinrichtung 50 vorgesehen. Alternativ kann jedoch vorgesehen sein, dass der zweite Transporteur 6 die zumindest abschnittsweise kurvenförmige Aufnahme- und Überleiteinrichtung 50 aufweist, diese also als Teil oder Bestandteil des zweiten Transporteurs 6 ausgebildet ist.

Es wird also der Behälter 2 nach Verlassen des Auslaufpunktes AP zunächst auf einem ersten kurvigen Transportstreckenabschnitt TSA1 entlang der Behälterbehandlungsstrecke BS in Behandlungsrichtung A mittels der Aufnahme- und Überleiteinrichtung 50 befördert, bevor derselbe Behälter 2 unmittelbar nach Verlassen der kurvigen Teilstrecke auf einen geradlinig ausbildeten zweiten Transportstreckenabschnitt TSA2 übergeben und dort mittels des zweiten Transporteurs 6 geradlinig linear entlang der Behälterbehandlungsstrecke BS in Transportrichtung A weitergefördert wird.

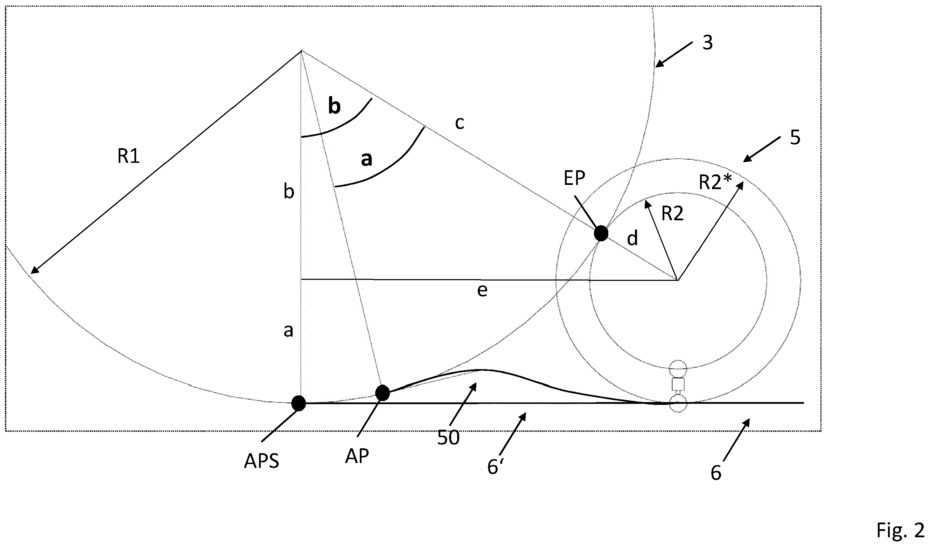

Wie insbesondere aus der Figur 2 ersichtlich, stellt sich durch das erfindungsgemäße Vorsehen der kurvenförmigen Aufnahme- und Überleiteinrichtung 50 ein Winkel a zwischen dem Einlaufpunkt EP und dem Auslaufpunkt AP ein, der kleiner ausgebildet ist als ein Winkel b zwischen dem Einlaufpunkt EP und dem tangentialen Auslaufpunkt APS gemäß Stand der Technik, also eines geradlinig verlaufenden zweiten Transporteurs 6', der die Behälter 2 unmittelbar aus dem Auslaufpunkt APS übernimmt und ausschließlich linear geradlinig entlang der Behälterbehandlungsstrecke BS transportiert. Der Winkel b stellt sich damit also zwischen dem Einlaufpunkt EP und dem tangentialen Auslaufpunkt APS gemäß Stand der Technik ein, bei dem ein ausschließlich geradlinig verlaufender zweiter Transporteur 6 die Behälter 2 bereits unmittelbar aus dem Rotor 3 übernimmt und in Behandlungsrichtung A entlang der Behälterbehandlungsstrecke BS ebenfalls geradlinig weiterfördert.

Für das bessere Verständnis sind hierfür in Figur 2 definiert:

R1 = a + b = c = Teilkreis des Rotors 3
R2 = d = Teilkreis des als Einlaufstern ausgebildeten ersten Transporteurs 5
R2* = Hüllkurve = a
c = Verbindungsgerade der Maschinenachse MA mit dem Einlaufpunkt EP
b + a = Verbindungsgerade der Maschinenachse MA mit dem Auslaufpunkt APS Stand der Technik

Hieraus kann der Winkel b wie folgt bestimmt werden:

b = Ankathete = R1 - a = R1 - R2*
c + d = Hypotenuse = R1 + R2
R2* = R2 + Durchmesser der Behälter 2 + Breite der Führung am Einlaufstern 5 + Breite der Führung am zweiten Transporteur 6

$$\text{Winkel } b = \arccos\left((R1-R2^*) / (R1+R2)\right)$$

Insbesondere wird hierdurch auch deutlich, dass die baulichen Gegebenheiten, insbesondere der Durchmesser R2 des ersten Transporteurs 5, der Durchmesser der Behälter 2 sowie die Breite der Führung am Einlaufstern 5 und die Breite der Führung am zweiten Transporteur 6 die Hüllkurve R2* und damit die Lage des Auslaufpunktes APS gemäß Stand der Technik bestimmen, der zwangsweise als tangentialer Auslaufpunkt am Radius R1 des Rotors 3 ausgebildet sein muss.

Durch die erfindungsgemäß vorgesehene kurvenförmig ausgebildete Aufnahme- und Überleiteinrichtung 50 kann dabei der Auslaufpunkt AP bezogen auf die Drehrichtung B des Rotors 3 in Richtung des Einlaufpunktes EP verschoben und damit die nutzbare Behandlungsbogenlänge des teilkreisförmigen Behandlungsbereiches des Rotors 3 erhöht werden und zwar um den Winkelbetrag $\Delta$ c, der sich aus dem Winkel b - (minus) Winkel a errechnet, wobei der Winkelbetrag $\Delta$ c damit den zusätzlichen Behandlungswinkel am Rotor 3 angibt

In anderen Worten wird also durch die erfindungsgemäß vorgesehene kurvenförmig ausgebildete Aufnahme- und Überleiteinrichtung 50 nutzbare Behälterbehandlungswinkel für die Behandlungsbogenlänge des teilkreisförmigen Behandlungsbereiches des Rotors 3 von 360° - (minus) Winkel b auf 360° - (minus) Winkel a erhöht.

Die erfindungsgemäße Aufnahme- und Überleiteinrichtung 50 ist dabei derart kurvig ausgebildet, dass sich zwischen dem Einlaufpunkt EP und dem tangentialen Auslaufpunkt AP ein Behälterbehandlungswinkel von 360° - Winkel a einstellt, der größer ausgebildet ist, als ein sich zwischen dem Einlaufpunkt EP und dem tangentialen Auslaufpunkt APS einstellender Behälterbehandlungswinkel von 360° - Winkel b eines ausschließlich geradlinig verlaufenden zweiten Transporteurs 6'.

Dabei kann vorgesehen sein, dass die Aufnahme- und Überleiteinrichtung 50 zum Aufnehmen der Behälter 2 ab dem tangentialen Auslaufpunkt AP bis zur Überleiten auf den geradlinig verlaufenden zweiten Transporteur 6 den ersten, zumindest abschnittweise kurvigen Transportstreckenabschnitt TSA1 vorsieht, der aus mehreren Übergangskurvenabschnitten ÜKA1, ÜKA2, ÜKA3 gebildet ist.

Dabei kann vorgesehen sein, dass die Krümmungsrichtung der Übergangskurvenabschnitte ÜKA1, ÜKA2, ÜKA3 unterschiedlich zueinander ausgebildet ist.

Bei Betrachtung des ersten Transportstreckenabschnittes TSA1 in Behandlungsrichtung A der Behälter 2 ist der erste Übergangskurvenabschnitt ÜKA1 im gezeigten Ausführungsbeispiel linksgekrümmt, der zweite Übergangskurvenabschnitt ÜKA2 rechtsgekrümmt und der dritte Übergangskurvenabschnitt ÜKA2 wiederum linksgekrümmt ausgebildet.

Dabei kann der erste Transportstreckenabschnitt TSA1 der Aufnahme- und Überleiteinrichtung 50 im Bereich der mehreren Übergangskurvenabschnitte ÜKA1, ÜKA2, ÜKA3 als verstellbare Kurvenbahn ausgebildet sein, die beispielsweise mittels zumindest einer nicht nähergehend dargestellten Verstelleinrichtung motorisch gesteuert- und/oder geregelt einstellbar ausgebildet ist.

Wie insbesondere in der Figur 1 erkennbar, sind die Behälter 2 während ihres Transports zumindest entlang des ersten Transportstreckenabschnittes TSA1 in einer durch beidseitig mittels Führungsgeländern 4 begrenzten Gasse 12 geführt, die die Kurvenbahn des zumindest einen Übergangskurvenabschnittes ÜKA1, ÜKA2, ÜKA3 vorgibt. Mehr im Detail bildet sich zwischen dem äußeren und inneren Führungsgeländer 4 eine Gasse 12 aus, in der die Behälter 2 zumindest entlang des ersten Transportstreckenabschnittes TSA1 und damit entlang des zumindest einen Übergangskurvenabschnittes ÜKA1, ÜKA2, ÜKA3 der Behälterbehandlungsstrecke TS geführt sind. Vorzugsweise fluchten die Gassen 12 des ersten Transportstreckenabschnittes TSA1 im Übergangsbereich zu dem zweiten Transportstreckenabschnitt TSA2 mit den Führungsgeländern 4' des zweiten Transporteurs 6, so dass sich fluchtende Gassen 12 bzw. 12' ausbilden.

Dabei kann die durch die Führungsgeländer 4 vorgegebene Kurvenbahn des zumindest einen Übergangskurvenabschnittes ÜKA1, ÜKA2, ÜKA3 mittels der zumindest einen Verstelleinrichtung motorisch einstellbar ausgebildet sein.

Dabei kann vorgesehen sein, dass der erste Transportstreckenabschnitt TSA1 einen ersten und zweiten Übergangskurvenabschnitt ÜKA1, ÜKA2 aufweist, die jeweils eine separat und unabhängig voneinander einstellbare Kurvenbahn aufweisen. In anderen Worten ist also der erste Transportstreckenabschnitt TSA1 in dieser Ausführungsvariante in zwei Übergangskurvenabschnitte ÜKA1, ÜKA2 aufgeteilt, die jeweils eine unabhängig voneinander einstallbare Kurvenbahn ausbilden.

Weiterhin vorteilhaft ist zumindest ein Übergangskurvenabschnitt ÜKA1, ÜKA2, ÜKA3 des ersten Transportstreckenabschnitts TSA1 als Klothoidenabschnitt KA1, KA2, KA3 und/oder Blossbogenabschnitt ausgebildet, dessen Verlauf klothoidenförmig bzw. blossbogenförmig gewählt ist.

Der erste Transportstreckenabschnitt TSA1 weist im gezeigten Ausführungsbeispiel der Figur 1 drei Klothoidenabschnitte KA1, KA2, KA3 auf. Hierbei ist der erste Übergangskurvenabschnitt ÜKA1 als Klothoidenabschnitt KA1, der zweite Übergangskurvenabschnitt ÜKA2 als Klothoidenabschnitt KA2 sowie der dritte Übergangskurvenabschnitt ÜKA3 als Klothoidenabschnitt KA3 ausgebildet.

Im gezeigten Ausführungsbeispiel der Figur 1 schließt der zweite Klothoidenabschnitt KA2 unmittelbar an den ersten Klothoidenabschnitt KA1 an, an den sich wiederum unmittelbar der dritte Klothoidenabschnitt KA3 anschließt. Die einzelnen Klothoidenabschnitte KA1, KA2, KA3 sind dabei jeweils über einen Wendepunkt WP verbunden, an dem ein Krümmungswechsel entlang des ersten Transportstreckenabschnitts TSA1 stattfindet, d.h. die Krümmung des ersten Transportstreckenabschnitts TSA1 ändert sich beispielsweise im Wendepunkt WP von rechtsgekrümmt auf linksgekrümmt.

Die Klothoidenabschnitte KA1, KA2, KA3 weisen jeweils ihren Ursprung im Wendepunkt WP auf, d.h. haben dort einen Krümmungsradius $R = \infty$ (nachfolgend als Klothoidenradius bezeichnet), d.h. die Klothoidenabschnitte KA1, KA2, KA3 gehen im Wendepunkt WP krümmungsfrei ineinander über. Anders ausgedrückt findet im Wendepunkt WP der Krümmungswechsel, also die Richtung der Krümmung, statt. Der Krümmungsradius wird dann mit steigender, von dem jeweiligen Ursprung bzw. Wendepunkt WP weggerichteten Bogenlänge größer.

Alternativ zu dem in Figur 2 gezeigten Verlauf kann der erste Transportstreckenabschnitt TSA1 zwischen den als Klothoidenabschnitten KA1, KA2, KA3 ausgebildeten Übergangskurvenabschnitten ÜKA1, ÜKA2, ÜKA3 einen gerade ausgebildeten Transportstreckenbereich aufweisen. Die Ausformung des ersten Transportstreckenabschnitts TSA1 kann so abhängig von den jeweiligen Gegebenheiten, beispielsweise dem Durchmesser der Transporteure 5, oder des Rotors 3 entsprechend gewählt werden.

In den vorherigen Ausführungen wurde eine Art eines Übergangsbogens in Form einer Klothoide oder Klothoidenkurve beschrieben. Alternativ und in analoger Anwendung kann dort jeweils auch ein anderer geeigneter Übergangsbogen mit knickfreier, stetig zu- oder abnehmender Krümmungsänderung vorgesehen werden, insbesondere ein Übergangsbogen in Form eines Blossbogens oder Blossbogenabschnitts. Auch Kombinationen eines Blossbogen/Blossbogenabschnitts und einer Klothoide bzw. eines Klothoidenabschnitts sind grundsätzlich denkbar. Weiterhin können Polynome und Trigonometrischen Funktionen zum Einsatz kommen.

Hierbei kann vorgesehen sein, dass zumindest ein Übergangskurvenabschnitt ÜKA1, ÜKA2, ÜKA3 des ersten Transportstreckenabschnittes TSA1 als Kurve ausgebildet ist, die über Polynome erzeugt wurde. Alternativ oder zusätzlich kann vorgesehen sein, dass zumindest ein Übergangskurvenabschnitt ÜKA1, ÜKA2, ÜKA3 des ersten Transportstreckenabschnittes TSA1 als Kurve ausgebildet ist, die über trigonometrische Funktionen erzeugt wurde.

Es kann also vorgesehen sein, dass zumindest ein Übergangskurvenabschnitt ÜKA1, ÜKA2, ÜKA3 des ersten Transportstreckenabschnitts TSA1 als Klothoidenabschnitt und/oder Blossbogenabschnitt BA1, BA2, BA3 ausgebildet ist.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird. Der Inhalt der Patentansprüche wird zum Gegenstand der Beschreibung erklärt.

**Bezugszeichenliste**

| | |
|---|---|
| 1 | Behälterbehandlungsvorrichtung |
| 2 | Behälter |
| 2.1 | Behälterinnenraum |
| 3 | Rotor |
| 4, 4' | Führungsgeländer |
| 5 | erster Transporteur |
| 6, 6' | zweiter Transporteur |
| 12,12' | Gasse |
| 50 | Aufnahme- und Überleiteinrichtung |
| A | Behandlungsrichtung |
| AP | Auslaufpunkt |
| APS | Auslaufpunkt des ausschließlich geradlinigen Transporteurs |
| BA1 | erster Blossbogenabschnitt |
| BA2 | zweiter Blossbogenabschnitt |
| BS | Behälterbehandlungsstrecke |
| B | Drehrichtung des Rotors 3 |
| BP | Behälterbehandlungsposition |
| EP | Einlaufpunkt |
| KA1, KA2 | erster/zweiter Klothoidenabschnitt |
| TSA1 | erster Transportstreckenabschnitt |
| TSA2 | zweiter Transportstreckenabschnitt |
| ÜKA1 | erster Übergabekurvenabschnitt |
| ÜKA2 | zweiter Übergabekurvenabschnitt |
| ÜKA3 | dritter Übergabekurvenabschnitt |
| MA | Maschinenachse |
| U | Umfang |
| WP | Wendepunkt |

**Patentansprüche**

1. Behälterbehandlungsvorrichtung (1), insbesondere Füllmaschine zum Füllen von Dosen oder dergleichen Behälter (2) mit einem flüssigen Füllgut entlang einer in einer Behandlungsrichtung (A) verlaufenden Behälterbehandlungsstrecke (BS),

   umfassend wenigstens einen ersten Transporteur (5), einen dem ersten Transporteur (5) in Behandlungsrichtung (A) nachgelagerten Rotor (3) mit mehreren Behandlungspositionen (BP) zur Behandlung der Behälter (2) sowie einen dem Rotor (3) in Behandlungsrichtung (A) wiederum nachgelagerten zweiten Transporteur (6), wobei der erste Transporteur (5) als Einlaufstern ausgebildet ist, mittels dem die zu behandelnden Behälter (2) in einem Einlaufpunkt (EP) an den um eine Maschinenachse (MA) umlaufenden Rotor (3) übergeben werden,

wobei der zweite Transporteur (6) als Linearförderer ausgebildet ist, mittels dem die an den mehreren Behandlungspositionen (BP) des Rotors (3) behandelten und noch unverschlossenen Behälter (2) weiterförderbar sind, wobei sich zwischen dem Einlaufpunkt (EP) und einem Auslaufpunkt (AP) des umlaufenden Rotors (3) ein teilkreisförmiger Behandlungsbereich mit einer vorgegebenen Behandlungsbogenlänge (BL) einstellt, entlang dem die mehreren Behandlungspositionen (FP) ausgebildet sind,

wobei zur Erhöhung der Behandlungsbogenlänge (BL) des teilkreisförmigen Behandlungsbereiches dem zweiten Transporteur (6) eine zumindest abschnittsweise kurvenförmige Aufnahme- und Überleiteinrichtung (50) zur Aufnahme der Behälter (2) im Auslaufpunkt (AP) und Überleitung an den zweiten Transporteur (6) vorgeschaltet ist, wobei die zumindest eine abschnittsweise kurvenförmige Aufnahme- und Überleiteinrichtung (50) einen ersten, zumindest abschnittsweise kurvigen Transportstreckenabschnitt (TSA1) aufweist, auf dem der jeweilige Behälter (2) förderbar ist, sowie einen in Behandlungsrichtung (A) folgenden, geradlinig ausbildeten zweiten Transportstreckenabschnitt (TSA2), auf dem der jeweilige Behälter (2) weiterförderbar ist, **dadurch gekennzeichnet, dass** der erste Transportstreckenabschnitt (TSA1) mehrere Übergangskurvenabschnitte (ÜKA1, ÜKA2, ÜKA3) aufweist, deren Krümmungsrichtung in Behandlungsrichtung (A) unterschiedlich zueinander, insbesondere in dem ersten Übergangskurvenabschnitt (ÜKA1) linksgekrümmt, in dem zweiten Übergangskurvenabschnitt (ÜKA2) rechtsgekrümmt und in dem dritten Überganskurvenabschnitt (ÜKA3) wiederum linksgekrümmt, ausgebildet ist.

2. Behälterbehandlungsvorrichtung (1) nach Anspruch 1, **dadurch gekennzeichnet, dass** die Aufnahme- und Überleiteinrichtung (50) den Auslaufpunkt (AP) des Rotors (3) mit dem zweiten Transporteur (6) verbindet.

3. Behälterbehandlungsvorrichtung (1) einem der vorhergehenden Ansprüchen, **dadurch gekennzeichnet, dass** der jeweilige Behälter (2) nach Verlassen des Auslaufpunktes (AP) zunächst auf dem ersten Transportstreckenabschnitt (TSA1) entlang der Behälterbehandlungsstrecke (BS) in Behandlungsrichtung (A) mittels der Aufnahme- und Überleiteinrichtung (50) förderbar ist und der jeweilige Behälter (2) unmittelbar nach Verlassen des ersten Transportstreckenabschnitts (TSA1) auf den zweiten Transportstreckenabschnitt (TSA2) übergebbar und dort insbesondere mittels des zweiten Transporteurs (6) geradlinig linear entlang der Behälterbehandlungsstrecke (BS) in Behandlungsrichtung (A) weiterförderbar ist.

4. Behälterbehandlungsvorrichtung (1) nach einem der vorhergehenden Ansprüche, **dadurch gekennzeichnet, dass** der erste Transportstreckenabschnitt (TSA1) im Bereich seiner mehreren Übergangskurvenabschnitte (ÜKA1, ÜKA2, ÜKA3) eine verstellbare Kurvenbahn aufweist, die insbesondere mittels zumindest einer Verstelleinrichtung motorisch gesteuert und/oder geregelt einstellbar ausgebildet ist.

5. Behälterbehandlungsvorrichtung (1) nach einem der vorhergehenden Ansprüche, **dadurch gekennzeichnet, dass** die Behälter (2) während ihres Transports zumindest entlang des ersten Transportstreckenabschnittes (TSA1) in einer durch beidseitig mittels Führungsgeländern (4) begrenzten Gasse (12) geführt sind, die die Kurvenbahn des zumindest einen Übergangskurvenabschnittes (ÜKA1, ÜKA2, ÜKA3) vorgeben.

6. Behälterbehandlungsvorrichtung (1) nach Anspruch 5, **dadurch gekennzeichnet, dass** die Führungsgeländer (4) des ersten Transportstreckenabschnittes (TSA1) im Übergangsbereich zu dem zweiten Transportstreckenabschnitt (TSA2) mit den Führungsgeländern (4') des zweiten Transporteurs (6) in Behandlungsrichtung (A) fluchten.

7. Behälterbehandlungsvorrichtung (1) nach einem der vorhergehenden Ansprüche, **dadurch gekennzeichnet, dass** zumindest ein Übergangskurvenabschnitt (ÜKA1, ÜKA2, ÜKA3) des ersten Transportstreckenabschnittes (TSA1) als Klothoidenabschnitt (KA1, KA2, KA3) und/oder Blossbogenabschnitt (BA1, BA2, BA3) ausgebildet ist.

8. Behälterbehandlungsvorrichtung (1) nach einem der vorhergehenden Ansprüche, **dadurch gekennzeichnet, dass** zumindest ein Übergangskurvenabschnitt (ÜKA1, ÜKA2, ÜKA3) des ersten Transportstreckenabschnittes (TSA1) als Kurve ausgebildet ist, die über Polynome erzeugt wurde.

9. Behälterbehandlungsvorrichtung (1) nach einem der vorhergehenden Ansprüche, **dadurch gekennzeichnet, dass** zumindest ein Übergangskurvenabschnitt (ÜKA1, ÜKA2, ÜKA3) des ersten Transportstreckenabschnittes (TSA1) als Kurve ausgebildet ist, die über trigonometrische Funktionen erzeugt wurde.

10. Behälterbehandlungsvorrichtung (1) nach einem der vorhergehenden Ansprüche, **dadurch gekennzeichnet, dass** sich mittels der kurvenförmigen Aufnahme- und Überleiteinrichtung (50) ein Winkel (a) zwischen dem Einlaufpunkt (EP) und dem Auslaufpunkt (AP) einstellt, der kleiner ausgebildet ist als ein Winkel (b) zwischen dem Einlaufpunkt

(EP) und dem tangentialen Auslaufpunkt (APS) eines ausschließlich geradlinig verlaufenden zweiten Transporteurs (6').

**Claims**

1. Container processing device (1), in particular a filling machine for filling cans or similar containers (2) with liquid contents along a container processing segment (BS) running in a processing direction (A), comprising at least one first transporter (5), a rotor (3) located downstream of the first transporter (5) in the processing direction (A), with several processing positions (BP) for processing the containers (2), and, located in turn downstream of the rotor (3) in the processing direction (A), a second transporter (6), wherein the first transporter (5) is configured as an inlet star, by means of which the containers (2) which are to be processed are transferred at an inlet point (EP) to the rotor (3) circulating about a machine axis (MA),

   wherein the second transporter (6) is configured as a linear conveyor, by means of which the containers (2) being processed at the several processing positions (BP) of the rotor (3) and still not closed can be further conveyed onwards,
   wherein a circular arc-shaped processing region is located between the inflow point (EP) and an outflow point (AP) of the circulating rotor (3), with a predetermined processing arc length (BL), along which the several processing positions (FP) are formed,
   wherein, in order to increase the processing arc length (BL) of the arc-shaped processing region, an at least partly curved receiving and transferring apparatus (50) is arranged upstream of the second transporter (6) for receiving the containers (2) at the outflow point (AP) and transferring them to the second transporter (6), wherein the at least one partly curved receiving and transferring apparatus (50) comprises a first at least partly curved transport segment section (TSA1), on which the respective containers (2) can be conveyed, as well as a second transport segment section (TSA2) following in the processing direction (A) and configured as straight, on which the respective container (2) can be further conveyed onwards, **characterised in that** the first transport segment section (TSA1) comprises several transfer curve sections (ÜKA1, ÜKA2, ÜKA3), of which the curvature directions in the processing direction (A) differ from one another, in particular configured as left-curvature in the first transfer curve sections (ÜKA1), right-curvature in the second transfer curve sections (ÜKA2), and left-curvature again in the third transfer curve sections (ÜKA3).

2. Container processing device (1) according to claim 1, **characterised in that** the receiving and transferring apparatus (50) connects the outflow point (AP) of the rotor (3) to the second transporter (6).

3. Container processing device (1) according to any one of the preceding claims, **characterised in that** the respective container (2), after leaving the outflow point (AP), can next be conveyed on the first transport segment section (TSA1) along the container processing segment (BS) in the processing direction (A) by means of the receiving and transferring apparatus (50), and the respective container (2) can be transferred onto the second transport segment section (TSA2) immediately after leaving the first transport segment section (TSA1), and there, in particular by means of the second transporter (6), can be conveyed further in a straight line in a linear direction the container processing segment (BS) in the processing direction (A).

4. Container processing device (1) according to any one of the preceding claims, **characterised in that** the first transport segment section (TSA1) comprises an adjustable curve path in the region of its several transfer curve sections (ÜKA1, ÜKA2, ÜKA3), which in particular is configured as adjustable, in particular by means of at least one adjustment device, in a manner controlled and/or regulated by means of a motor.

5. Container processing device (1) according to any one of the preceding claims, **characterised in that** the containers (2) are guided, at least along the first transport segment section (TSA1), in a channel (12) delimited on both sides by means of guide rails (4), which predetermines the curved path of the at least one transfer curve section (ÜKA1, ÜKA2, ÜKA3).

6. Container processing device (1) according to claim 5, **characterised in that** guide rails (4) of the first transport segment section (TSA1), in the transfer region to the second transport segment section (TSA2), run flush with the guide rails (4') of the second transporter (6) in the processing direction (A).

7. Container processing device (1) according to any one of the preceding claims, **characterised in that** at least one transfer curve section (ÜKA1, ÜKA2, ÜKA3) of the first transport segment section (TSA1) is configured as a clothoid section (KA1, KA2, KA3) and/or a Bloss curve section (BA1, BA2, BA3).

8. Container processing device (1) according to any one of the preceding claims, **characterised in that** at least one transfer curve section (ÜKA1, ÜKA2, ÜKA3) of the first transport segment section (TSA1) is configured as a curve, which was produced by polynomials.

9. Container processing device (1) according to any one of the preceding claims, **characterised in that** at least one transfer curve section (ÜKA1, ÜKA2, ÜKA3) of the first transport segment section (TSA1) is configured as a curve, which was produced by trigonometric functions.

10. Container processing device (1) according to any one of the preceding claims, **characterised in that**, by means of the curved receiving and transferring apparatus (50), an angle (a) is formed between the inflow point (EP) and the outflow point (AP), which is smaller than the angle (b) between the inflow point (EP) and the tangential outflow point (APS) of a second transporter (6') running in an exclusively straight line.

**Revendications**

1. Dispositif de traitement de contenants (1), en particulier machine de remplissage destinée à remplir des boîtes ou des contenants similaires (2) avec un produit de remplissage liquide le long d'une ligne de traitement de contenants (BS) s'étendant dans une direction de traitement (A),

   comprenant au moins un premier transporteur (5), un rotor (3) monté en aval du premier transporteur (5) dans la direction de traitement (A) avec plusieurs positions de traitement (BP) pour traiter les contenants (2) ainsi qu'un deuxième transporteur (6) à son tour monté en aval du rotor (3) dans la direction de traitement (A), dans lequel le premier transporteur (5) est réalisé en tant qu'étoile d'entrée, au moyen de laquelle les contenants (2) à traiter sont transférés, dans un point d'entrée (EP), au rotor (3) tournant autour d'un axe de machine (MA),
   dans lequel le deuxième transporteur (6) est réalisé comme un convoyeur linéaire, au moyen duquel les contenants (2) traités sur les plusieurs positions de traitement (BP) du rotor (3) et encore non fermés peuvent être convoyés,
   dans lequel, entre le point d'entrée (EP) et un point de sortie (AP) du rotor (3) qui tourne, une zone de traitement semi-circulaire avec une longueur d'arc de traitement (BL) spécifiée est réglée, le long de laquelle les plusieurs positions de traitement (FP) sont réalisées,
   dans lequel, pour augmenter la longueur d'arc de traitement (BL) de la zone de traitement semi-circulaire, un système de réception et de transfert (50) au moins par endroits incurvé est installé en amont du deuxième transporteur (6) pour recevoir les contenants (2) sur le point de sortie (AP) et pour les transférer au deuxième transporteur (6), dans lequel l'au moins un système de réception et de transfert (50) au moins par endroits incurvé présente une première section de ligne de transport (TSA1) au moins par endroits incurvée, sur laquelle le contenant (2) respectif peut être convoyé, ainsi qu'une deuxième section de ligne de transport (TSA2) rectiligne qui suit dans la direction de traitement (A), sur laquelle le contenant (2) respectif peut être convoyé, **caractérisé en ce que** la première section de ligne de transport (TSA1) présente plusieurs sections de courbe de transition (ÜKA1, ÜKA2, ÜKA3) dont la direction de courbure dans la direction de traitement (A) est différente les unes des autres, en particulier est réalisée de manière courbée à gauche dans la première section de courbe de transition (ÜKA1), de manière courbée à droite dans la deuxième section de courbe de transition (ÜKA2) et à nouveau de manière courbée à gauche dans la troisième section de courbe de transition (ÜKA3).

2. Dispositif de traitement de contenants (1) selon la revendication 1, **caractérisé en ce que** le système de réception et de transfert (50) relie le point de sortie (AP) du rotor (3) au deuxième transporteur (6).

3. Dispositif de traitement de contenants (1) selon l'une quelconque des revendications précédentes, **caractérisé en ce que** le contenant (2) respectif peut être convoyé, après avoir quitté le point de sortie (AP), d'abord sur la première section de ligne de transport (TSA1) le long de la ligne de traitement de contenants (BS) dans la direction de traitement (A) au moyen du système de réception et de transfert (50) et le contenant (2) respectif peut être transféré, immédiatement après avoir quitté la première section de ligne de transport (TSA1), sur la deuxième section de ligne de transport (TSA2) et peut y être convoyé en ligne droite linéairement le long de la ligne de traitement des contenants (BS) dans la direction de traitement (A), en particulier au moyen du deuxième transporteur (6).

4. Dispositif de traitement de contenants (1) selon l'une quelconque des revendications précédentes, **caractérisé en ce que** la première section de ligne de transport (TSA1) présente dans la zone de ses plusieurs sections de courbe de transition (ÜKA1, ÜKA2, ÜKA3) une trajectoire ajustable, qui est réalisée de manière commandée par moteur et/ou de manière réglable par régulation en particulier au moyen d'au moins un système d'ajustement.

5. Dispositif de traitement de contenants (1) selon l'une quelconque des revendications précédentes, **caractérisé en ce que** les contenants (2) sont guidés pendant leur transport au moins le long de la première section de ligne de transport (TSA1) dans une allée (12) délimitée des deux côtés par des rails de guidage (4), qui spécifient la trajectoire de l'au moins une section de courbe de transition (ÜKA1, ÜKA2, ÜKA3).

6. Dispositif de traitement de contenants (1) selon la revendication 5, **caractérisé en ce que** les rails de guidage (4) de la première section de ligne de transport (TSA1) sont alignés dans la zone de transition vers la deuxième section de ligne de transport (TSA2) avec les rails de guidage (4') du deuxième transporteur (6) dans la direction de traitement (A).

7. Dispositif de traitement de contenants (1) selon l'une quelconque des revendications précédentes, **caractérisé en ce qu'**au moins une section de courbe de transition (ÜKA1, ÜKA2, ÜKA3) de la première section de ligne de transport (TSA1) est réalisée en tant que section en clothoïde (KA1, KA2, KA3) et/ou en tant que section d'arc de raccordement (BA1, BA2, BA3).

8. Dispositif de traitement de contenants (1) selon l'une quelconque des revendications précédentes, **caractérisé en ce qu'**au moins une section de courbe de transition (ÜKA1, ÜKA2, ÜKA3) de la première section de ligne de transport (TSA1) est réalisée en tant que courbe, qui a été générée par l'intermédiaire de polynômes.

9. Dispositif de traitement de contenants (1) selon l'une quelconque des revendications précédentes, **caractérisé en ce qu'**au moins une section de courbe de transition (ÜKA1, ÜKA2, ÜKA3) de la première section de ligne de transport (TSA1) est réalisée en tant que courbe, qui a été générée par l'intermédiaire de fonctions trigonométriques.

10. Dispositif de traitement de contenants (1) selon l'une quelconque des revendications précédentes, **caractérisé en ce qu'**un angle (a) entre le point d'entrée (EP) et le point de sortie (AP) est réglé au moyen du système de réception et de transfert (50) incurvé, qui est inférieur à un angle (b) entre le point d'entrée (EP) et le point de sortie (APS) tangentiel d'un deuxième transporteur (6') s'étendant exclusivement en ligne droite.

Fig. 1

Fig. 2

EP 3 990 376 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005042275 A1
- JP 2001287794 A